# EUROPEAN PATENT APPLICATION

(11) **EP 1 158 721 A2**
(43) Date of publication of application: **28.11.2001**
(21) Application number: 01304583.6
(22) Date of filing: 24.05.2001
(51) Int. Cl.: H04L 12/24, H04L 12/28

(54) **Method of controlling transmission and apparatus for controlling transmission**

(30) Priority: 25.05.2000 JP 2000155029
(71) Applicant: SONY CORPORATION, Tokyo (JP)
(72) Inventor: Sugaya, Shigeru, c/o Sony Corporation, Tokyo (JP)
(74) Representative: Nicholls, Michael John

(57) **Abstract**

To provide a method of controlling transmission and a device for controlling transmission capable of notifying the updating of management data simultaneously to all communication stations on the network. A method of controlling transmission in which a region (down management data transmission section (CS)) is secured in advance for transmitting the management data to be updated even when the management data has a constitution of a variable length, in order to notify the management data and the update timing (cycle time data 51-1, network ID 51-2, data updating counter 51-3, SSP counter 51-4, SSP period 52-1, SSP number 52-2, band reservation data number 52-3, frame end pointer 52-4, data size of variable-length frame 52-5, station data (#1 to #4) 54-1 to 55-2, and band reservation data (#1 and #2) 56 and 57 to the whole network, in order to update the management data at one time at a specified timing.

## Description

The present invention relates to a method of controlling transmission and a device for controlling transmission that can be favorably applied to a case of constituting a local area network (LAN) among plural equipment by, for example, transmitting radio signals to various devices.

At present, in a transmission system using a radio network specified by the wireless 1394 format, there has been specified a method of synchronizing the updating of data by utilizing an updating counter for updating the management data of the radio network.

The method of synchronizing the updating of data using the updating counter has been disclosed in Japanese Unexamined Patent Publication (Kokai) No.151641/2000.

According to this method, there is realized a radio transmission control method in which when the data are to be changed at one time in the radio network, the data to be updated and the data of timing for updating are transmitted in advance plural number of times, so that the data can be simultaneously updated among the whole terminal stations in the network even in a radio network in which connection is unstable in regard to time and space.

The above method was accomplished in order to maintain synchronism among all transmission devices constituting the network at the time of updating the network management data and the data related to the conditions of utilizing the transmission lines.

As the data updating method, there can be assumed a constitution in which the data to be updated and the updating timing therefor are broadcasted from the control station into the radio network, the data being repetitively broadcasted plural times as the counter is subtracted until the update timing periodically goes out of time.

If the broadcasted data can be received at least one time before the update timing goes out of time, then, each of the terminal devices constituting the network is allowed to learn both the timing for updating the management data and the management data changed thereafter.

When the radio network is built up by plural terminal devices, it often happens that the data is not transmitted to all communication stations from the control station by the broadcasting of one time. By utilizing the above technologies, therefore, the management data are easily shared in the network.

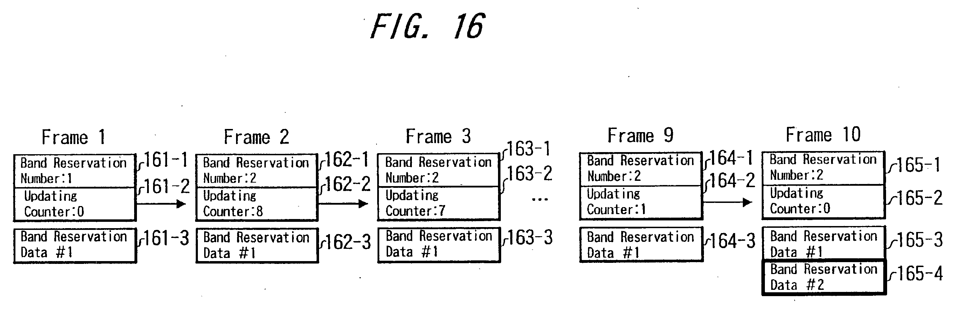

Fig. 16 of the accompanying drawings illustrates the flow of frames of when the band reservation data is added according to a prior method.

In Fig. 16, the extreme left diagram illustrates the constitution of a cycle start packet (CSP) in which a band reservation data (#1) 161-3 is arranged in a frame 1 with a band reservation number of 1 (161-1) and an updating counter (counted value) of 0 ( 161-2).

The subsequent frames 2 to 9 show a shift until a band
reservation data (#2) 165-4 is added.

The frame 2 represents the constitution of a cycle start packet (CSP) in which are set a band reservation number: 2 (162 - 1) and an update counter: 8 (162 - 2), and in which a band reservation data (#1) 162 - 3 is arranged.

Addition of the band reservation data is requested at a moment of the frame 2. If a variable length portion of the cycle start packet (CSP) is readily expanded, however, a communication station that has failed to receive a fixed length portion of the CSP becomes no longer capable of correctly executing the decoding processing. Accordingly, an updating counter is set, and the processing for adding the band reservation data is executed at a timing several frames in advance.

A further next right diagram with a band reservation number of 2 (163-1), i.e., illustrates the constitution of a cycle start packet (CSP) in which a band reservation data (#1) 163-3 is arranged with an updating counter being subtracted to 7 (163-2).

A diagram on the right side of a dotted line shows a transition in a frame 9 until a band reservation data (#2) 165-4 is added with a band reservation number of 2 (164-1), i.e., illustrates the constitution of a cycle start packet (CSP) in which a band reservation data (#1) 164-3 is arranged with an updating counter being subtracted to 1 (164-2).

At this moment, if the cycle start packets (CSP) can be received only once from the frame 2 through up to the frame 9, it can be judged that the band reservation data (#2) 165-4 is added from the next frame 10.

The extreme right diagram shows the constitution of a cycle start packet (CSP) in which a band reservation data (#1) 165-3 and a band reservation data (#2) 165-4 are arranged in a frame 10 with a band reservation number of 2 (165-1) and an updating counter of 0 (165-2).

According to the prior method as described above, the band reservation data added at the communication stations could not be learned unless the frame 10 arrives.

According to the above-mentioned prior method of synchronizing the data in the radio network, when the management data broadcasted to the whole network from the control station is constituted to have a variable length instead of heaving a fixed length, notice could not be simultaneously sent to all communication stations on the network at the time of adding the management data unless a change in the length of the management data and the addition (change) of the content of the management data were separately noticed.

That is, according to the above-mentioned prior method of gradually subtracting the updating counter by notifying the update timing, when the data are to be added, it becomes necessary to update the data of plural parameters in order to expand the region for specifying the addition and to notify the updating of management data by using the expanded region, as well as to set the timings for updating the data of the respective parameters and to subtract the updating counters for each of them.

The present invention was accomplished in view of the above-mentioned points, and provides a method of controlling transmission and a device for controlling transmission capable of notifying the updating of management data to all communication stations on the network simultaneously.

According to the method of controlling transmission of the present invention, management data provided with a free region is set in advance, and when the management data are to be updated, there are formed timing data for effecting the updating and update management data describing the contents to be updated in said free region , the update management data are transmitted to the communication stations, and the management data are updated on the network at a timing specified by the timing data.

When data are to be updated (added) for the management data, therefore, a free region is secured in advance for updating the data, data to be added are described therein, the management data to be updated and the update timing are notified to the whole network by utilizing the subtraction method of update counter, and the management data are updated at one time at a specified timing.

According to the method of controlling transmission of the present invention, further, when the management data are to be partly deleted, there are formed timing data for effecting the deletion and update management data describing other management data utilizing a portion that is to be deleted, the update management data are transmitted to said communication stations, and the update management data are partly deleted on the network at a timing specified by the timing data.

Further, the communication station of the present invention comprises reception means for receiving management data used in common on a radio network, and control means for controlling the communication according to the management data, wherein a free region is set in advance to the management data, and when the management data are to be updated, the reception means receives timing data for effecting the updating and the update management data describing the contents to be updated in the free region , arid updates the management data at a timing specified by the timing data.

Further, the communication station of the present invention comprises reception means for receiving the management data used in common on a radio network, and control means for controlling the communication according to the management data, wherein a free region is set in advance to the management data, and when the management data are to be partly deleted, the reception means receives the timing data for effecting the deletion and the update management data describing other management data utilizing a portion to be deleted, and deletes part the management data at a timing specified by the timing data.

Embodiments of the invention will now be described, by way of example only, with reference to the accompanying drawings in which:-
FIG.1 is a diagram illustrating the constitution of a radio network to which is applied a method of controlling transmission of an embodiment;
FIG.2 is a diagram schematically illustrating the network connection;
FIG.3 is a diagram illustrating the constitution of a radio transmission device constituting a communication station;
FIG.4 is a diagram illustrating the constitution of a radio transmission frame;
FIG.5 is a diagram illustrating the constitution of a cycle start packet;
FIG.6 is a diagram illustrating the constitution of a cycle report packet;
FIG.7 is a diagram illustrating the constitution of a station sync packet;
FIG.8 is a diagram illustrating an example of adding a band reservation data;
FIG.9 is a diagram illustrating an example of deleting a band reservation data;
FIG. 10 is a diagram illustrating an example of adding a maximum number of band reservation data;
FIG.11 is a diagram illustrating an example of deleting a station data;
FIG.12 is a flowchart illustrating the operation for notifying a change in the band reservation data;
FIG.13 is a flowchart illustrating the operation for notifying a change in the (station) communication station data;
FIG.14 is a flowchart illustrating the count-down operation in the control station;
FIG. 15 is a flowchart illustrating the operation for receiving the communication station data; and
FIG.16 is a diagram illustrating an example of adding a band reservation data according to a previous method.

According to the method of controlling transmission of this embodiment, a free region is secured for adding management data, the data to be changed is written at the time of addition, or plural management data are written into the region to be deleted at the time of deletion, and the data related to the update timing is notified, so that the communication stations judge the management data to be changed and the update timing relying upon the above data.

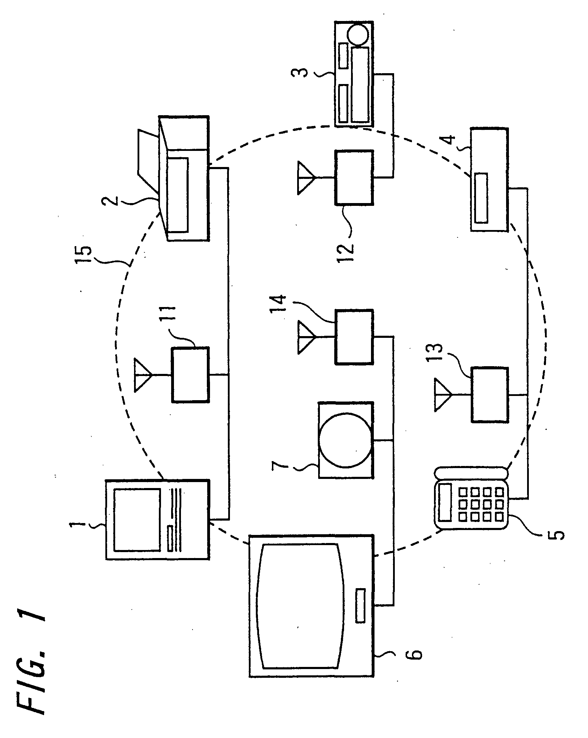

An embodiment will now be described. FIG. 1 is a diagram illustrating the constitution of a network system to which is applied the method of controlling transmission of this embodiment.

Referring, for example, to FIG. 1, a personal computer 1 and a printer output device 2 are connected to a radio transmission device 11 through cables. Further, a VTR (video tape recorder) 3 is connected to a radio transmission device 12 through, similarly, a cable. A telephone 5 and a set top box 4 are connected to a radio transmission device 13 through, similarly, cables. Similarly, further, a television receiver 6 and a game device 7 are connected to a radio transmission device 14 through cables. Thus, the devices are connected to the radio transmission devices which constitute a network 15.

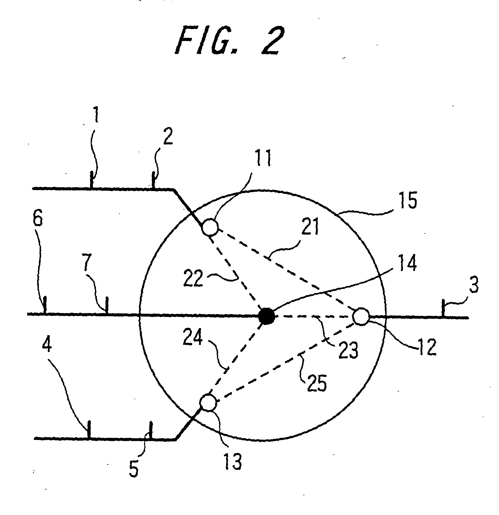

FIG.2 is a diagram schematically illustrating he connection of the network.

In FIG.2, the radio network 15 is constituted by the radio transmission devices 11, 12, 13 which are terminal communication stations represented by open circles arranged about the radio transmission device 14 which is a control station represented by a black circle. The personal computer 1 and the printer output device 2 are connected to the radio transmission device 11 as indicated by a solid line. Similarly, the VRT 3 is connected to the radio transmission device 12 as indicated by a solid line. Similarly, further, the telephone 5 and the set top box 4 are connected to the radio transmission device 13 as indicated by a solid line. Further, the television receiver 6 and the game device 7 are similarly connected to the radio transmission device 14 as indicated by a solid line.

Here, in the radio network 15, the control station 14 is capable of effecting the communication with all communication stations 11 to 13 on the network 15 through circuits 22 to 24 indicated by dotted lines.

On the other hand, the communication station 11 is not allowed to effect the communication directly with the remote communication station 13 but is allowed to effect the communication with the control station 14 and with the communication station 12 on the network 15 through the circuits 22 and 21 indicated by dotted lines.

The communication station 12 is capable of effecting the communication with the control station 14 and the communication stations 11, 13 on the network 15 through the circuits 23, 21 and 25 indicated by dotted lines.

The communication station 13 is not allowed to effect the communication directly with the remote communication station 11 but is allowed to effect the communication with the control station 14 and with the communication station 12 on the network 15 through the circuits 24 and 25 indicated by dotted lines.

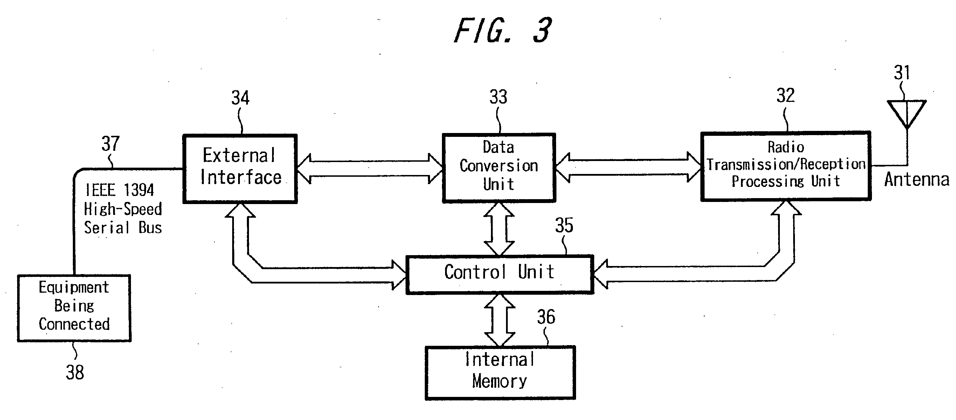

FIG.3 illustrates the constitution of the radio transmission devices 11 to 14 which are the communication stations.

The radio transmission devices 11 to 14 are fundamentally constituted in common, and include an antenna 31 for transmission and reception, and a radio transmission/reception processing unit 32 connected to the antenna 31 to execute the radio transmission processing and the radio reception processing, so as to effect radio transmission with other transmission devices.

Here, the transmission system for effecting the transmission and reception using the radio transmission/reception processing unit 32 of this embodiment will be, for example, the one called OFDM (orthogonal frequency division multiplex) system using multi-carrier signals, and the frequency used for the transmission and reception will be the one in a very high frequency band (e.g., 5 GHz band).

In this embodiment, further, the transmission output is relatively weak. When used indoors, for example, the output is for effecting the radio transmission over a relatively short distance of from several meters to several tens of meters.

Provision is further made of a data conversion unit 33 for converting the data of signals received by the radio transmission/reception processing unit 32 and for converting the data of signals transmitted by the radio transmission/reception processing unit 32.

The data converted by the data conversion unit 33 is fed to an equipment 38 connected through an interface unit 34, and the data fed from the equipment 38 is fed, through the interface unit 34, to the data conversion unit 33 so as to be converted.

Here, voice, video data or various data are transmitted to, and received from, the equipment 38 through a high-speed serial bus 37 such as IEEE 1394 format which is an external interface of the interface unit 34 of the radio transmission device.

Or, the radio transmission device may be incorporated in the body of the equipment 38 that is connected.

The individual units in each radio transmission device execute the processings being controlled by a control unit 35 constituted by a microcomputer.

In this case, when the signal received by the radio transmission/reception processing unit 32 in each radio transmission device is the one in the management region, the thus received signal is fed to the control unit 35 through the data conversion unit 33, and the control unit 35 works to set the individual units to a state represented by the received data.

Further, an internal memory 36 is connected to the control unit 35 and temporarily stores the data necessary for controlling the communication, number of the communication stations constituting the network, data of a frame period for transmitting a station-synchronizing signal, data of a communication station that transmits the station-synchronizing signal at a predetermined frame period, data for utilizing the transmission path such as the number of band reservations, and a value of the data updating counter.

In the radio transmission device that serves as the control station 14 of the network, a cycle start (CS) signal that will be described later of the network is fed to the radio transmission/reception processing unit 32 through the data conversion unit 33 and is transmitted at a predetermined frame period from the control unit 35.

In the transmission devices 11 to 13 other than the control station of the network, when the received signal is a cycle start (CS) signal, the received signal is fed to the control unit 35 through the data conversion unit 33, the timing of receiving the synchronizing signal is judged by the control unit 35, a frame period is set based on the synchronizing signal, and the communication control processing is executed at the frame period.

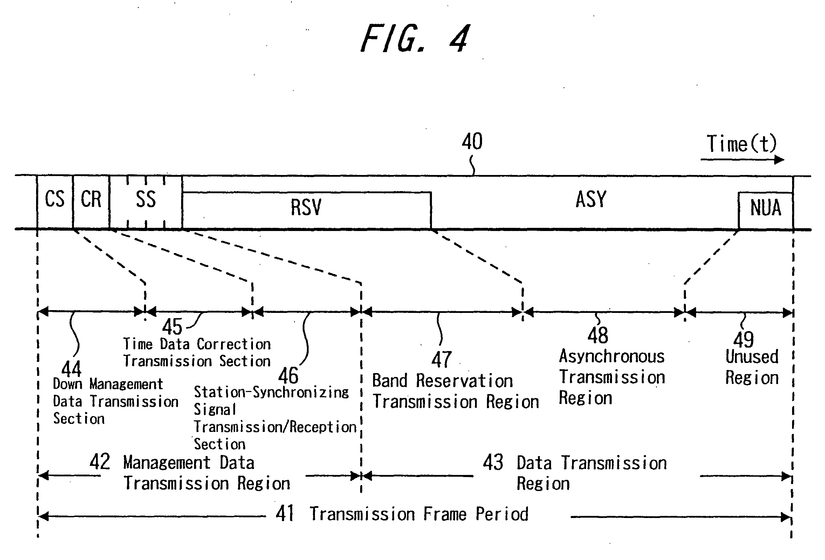

FIG.4 is a diagram illustrating the constitution of a radio transmission frame according to the embodiment. Here, the frame is specified for convenience. However, this structure of the frame needs not necessarily be employed. In FIG.4, a transmission frame is specified that arrives after every predetermined transmission frame period 41 along the radio transmission line 40, and in which are provided a management data transmission region 42 and a data transmission region 43.

At the head of the frame is arranged a down management data transmission section 44 (CS: cycle start) for notifying the frame synchronism and the network common data followed, as required, by the arrangement of a time data correction transmission section 45 (CR: cycle report) and a station-synchronizing signal transmission/reception section 46 (SS: station sync).

The down management data transmission section (CS) is used for transmitting, from the control station, the data that must be used in common in the network, and includes a fixed length region and a variable length region.

In the fixed length region, the number of the communication stations transmitted in the station-synchronizing signal transmission/reception section (SS) is specified and the number of the band reservation transmission regions (RSV) is specified in order to specify the length of the variable length region. And, in the variable length region, the communication stations transmitted in the station-synchronizing signal transmission/reception section (SS) is specified and the band reservation transmission region (RSV) is specified.

The station-synchronizing signal transmission/reception section (SS) has a predetermined length and is so constituted that the communication stations that transmit are assigned maintaining a some degree of period by the down management data for the communication stations constituting the network.

For example, upon receiving all station-synchronizing signal
transmission/reception sections (SS) except the portion transmitted to the local station, it is allowed to grasp the condition of connection to the communication stations existing around the local station.

Further, the conditions of connection is informed in the data transmitted by the next local station in the station-synchronizing information transmission/reception section (SS), so that the conditions of connection to the network can be grasped by the communication stations.

The data transmission region 43 is constituted by a band reservation transmission region (RSV: reserve) 47 that is set as required, an asynchronous transmission region (ASY: asynchronous) 48 of the centralized management controlled for its transmission by the control station, and a unused region (NUA: not using area) of the noncentralized control which is not controlled for its transmission by the control station.

That is, if neither the band reservation transmission (RSV) nor the unused region (NUA) is required, the data transmission regions can all be transmitted as the asynchronous transmission regions (ASY) of the centralized control.

Upon employing the above frame structure, the isochronous transmission specified by, for example, IEEE 394 format is executed in the band reservation transmission region (RSV), and the asynchronous transmission is executed in the asynchronous transmission region (ASY).

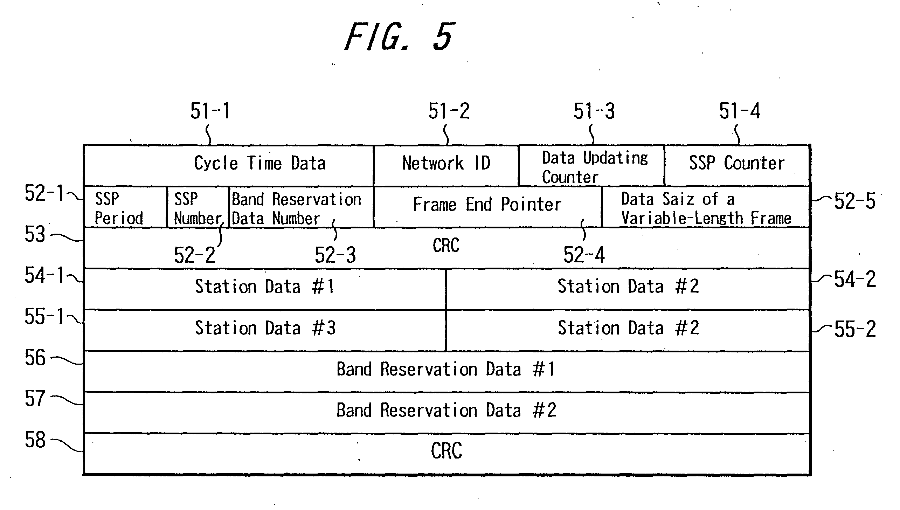

FIG.5 is a diagram illustrating the constitution of a cycle start packet.

The cycle start packet is a data transmitted from the control station in the network to all stations in the network in the down management data transmission section (CS) 44 shown in FIG.4.

In the packet are arranged a cycle time data 51-1 indicating the start time of the frame, a network ID 51-2 for discriminating the network, a data updating counter 51-3 indicating the timing until the data contained in the cycle start packet (CSP) are updated at one time, an SSP counter 51-4 indicating the order of data contained in the station sink packet (SSP), an SSP period 52-1 indicating the transmission period of the station sink packet (SSP), an SSP number 52-2 indicating the number of the station sink packets (SSP) present in the frame, a band reservation number 52-3 indicating the number of the reserved bands, a frame end pointer 52-4 indicating a position of ending the frame, a variable length frame data size 52-5 indicating a given number of data, and a CRC (cyclic redundancy check) 53 for detecting error, as data of fixed lengths.

There are further arranged, as variable length data, a station data (#1) 54-1, a station data (#2) 54-2, a station data (#3) 55-1 and a station data (#4) 55-2 of which the lengths vary depending upon the number of the station sync packets (SSP), as well as a band reservation data (#1) 56, a band reservation data (#2) 7 and a CRC 58 for detecting error of which the lengths vary depending upon the number of the preserved bands.

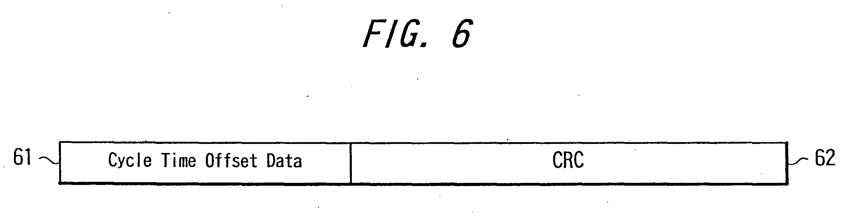

FIG. 6 is a diagram illustrating the constitution of a cycle report packet.

The cycle report packet is a data transmitted to the control station in the network from the communication station that serves as a cycle master on the network in the time data correction transmission section (CR) 45 shown in FIG.4.

This packet is constituted by a cycle time offset data 61 that represents an offset value of cycle time data of the cycle start packet (CSP) transmitted by the preceding frame from the control station, and a CRC 62 for detecting error.

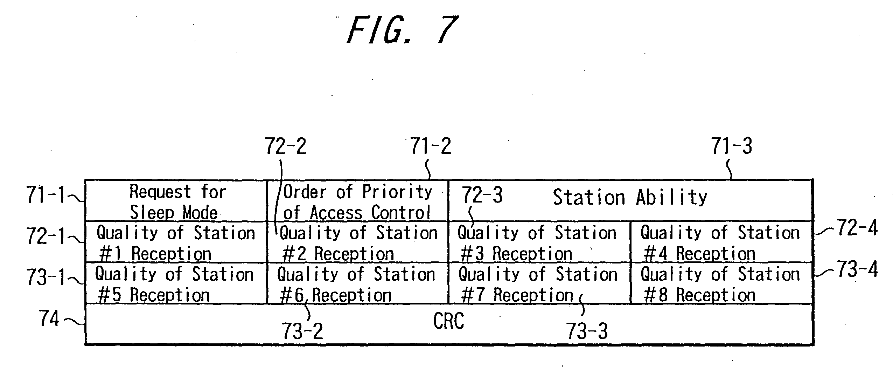

FIG.7 is a diagram illustrating the constitution of the station sync packet.

This station sync packet is a data transmitted to the control station and to the surrounding communication stations from the station (communication station) that is specified by the station data of CSP in the station-synchronizing information transmission/reception section (SS) 46 shown in FIG.4.

This packet is constituted by a sleep mode request 71-1 for notifying the control station of going into sleep, an access control priority order 71-2 for specifying the order of priority of access control right, a station ability 71-3 representing the data processing ability of the station, a station #1 reception quality 72-1, a station #2 reception quality 72-2, a station #3 reception quality 72-3, a station #4 reception quality 72-4, a station #5 reception quality 73-1, a station #6 reception quality 73-2, a station #3 reception quality 73-3 and a station #3 reception quality 73-4 which are the data of connection to other stations, and a CRC 74 for detecting error.

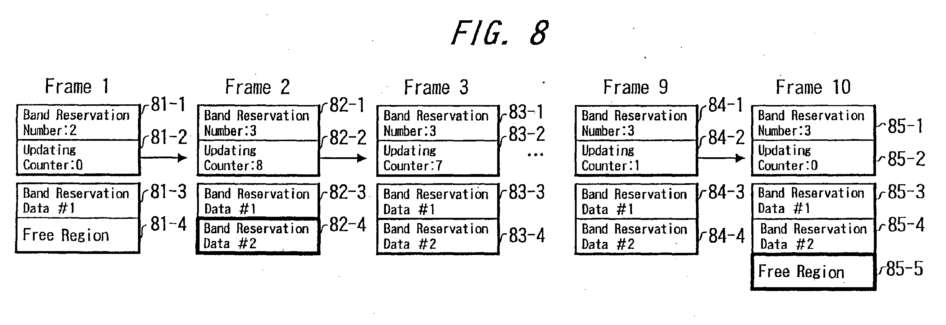

FIG.8 illustrates the flow of frames by the addition of the band reservation data according to the embodiment.

In FIG.8, the extreme left diagram illustrates the constitution of a cycle start packet (CSP) in a frame 1 in which a band reservation data (#1) 81-3 and a free region 81-4 are arranged with a band reservation number of 2 (81-1) and an updating counter (counted value) of 0 (81-2).

In an ordinary state, the frame 1 is provided with a free region 81-4 in advance.

The subsequent frames 2 to 9 show a shift until the band reservation data (#2)

85-4 is added.

The frame 2 shows the constitution of a cycle start packet (CSP) in which there are set a band reservation number 3 (82- 1) and an updating counter 8 (82-2), and the band reservation data (#2) 82-4 is added to the free region 81-4.

Illustrated here is a state where the updating counter is set to 8 (42-2) as a timing until a free region 85-4 is arranged.

At this moment, the band reservation data (#2) 82-4 is added, and the band reservation can be readily transmitted.

A further right diagram in a frame 3 with a band reservation number of 3 (83-1), and illustrates the constitution of a cycle start packet (CSP) in which a band reservation data (#1) 83-3 and a band reservation data (#2) 83-4 are arranged in a state where the updating counter is subtracted to 7 (83-2).

A diagram on the right side of a dotted line illustrates a transition until the free region 85-5 is added in a frame 9 with a band reservation number of 3 (84-1), and illustrates the constitution of a cycle start packet (CSP) in which a band reservation data (#1) 84-3 and a band reservation data (#2) 84-4 are arranged in a state where the updating counter is subtracted to 1 (84-2).

At this moment, if the cycle start packet (CSP) of the frame 2 through up to the frame 9 can be received only once, then, it can be judged from the next frame 10 that the free region 85-5 is added.

The extreme right diagram illustrates the constitution of a cycle start packet (CSP) in a frame 10 in which a band reservation data (#1) 85-3, a band reservation data (#2) 85-4 and a free region 85-5 are arranged with a band reservation number of 3 (85-1) and an updating counter of 0 (85-2).

As described above, the band reservation data can be readily added and the data updating counter is utilized for adding the free region to be ready for adding the band reservation data next time.

The CSP of this embodiment has a feature in that it usually has the free region at all times for updating (adding) the band reservation data.

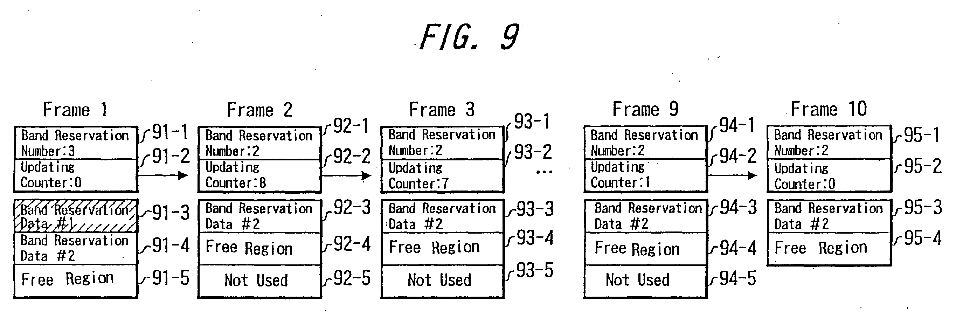

FIG. 9 illustrates the flow of frames by the deletion of band reservation data according to the embodiment.

In FIG.9, the extreme left diagram illustrates the constitution of a cycle start packet (CSP) in a frame 1 in which a band reservation data (#1) 91-3, a band reservation data (#2) 91-4 and a free region 91-5 are arranged with a band reservation number of 3 (91-1) and an updating counter (counted value) of 0 (91-2).

The subsequent frames 2 to 9 show a shift until the band reservation data (#1) 91-3 is deleted.

The frame 2 shows the constitution of a cycle start packet (CSP) in which the band reservation number 2 (92-1) and the updating counter 8 (92-2) are set, the band reservation data (#1) is deleted, and a free region 92-4 and an unused space 92-5 are arranged in the band reservation data (#2) 92-3.

Illustrated here is a state where the updating counter is set to 8 (92-2) as a timing until the band reservation data (#1) 91-3 is deleted and until the band reservation data ("2) 95-3 and the free region 95-4 are arranged.

A further right diagram are arranged in a frame 3 with a band reservation number of 2 (93-2), and illustrates the constitution of a cycle start packet (CSP) in which a band reservation data (#2) 93-3, a free region 93-4 and an unused region 93-5 are arranged in a state where the updating counter is subtracted to 7 (93-2).

A diagram on the right side of a dotted line are arranged in a frame 9 with a band reservation number of 2 (94-1), and illustrates the constitution of a cycle start packet (CSP) in which a band reservation data (#2) 94-3, a free region 94-4 and an unused region 95-5 are arranged in a state where the updating counter is subtracted to 1 (94-2).

At this moment, if the cycle start packet (CSP) of the frame 2 through up to the frame 9 can be received only once, then, it can be judged from the next frame 10 that the band reservation data (#1) 91-3 is deleted from the next frame 10.

The extreme right diagram illustrates the constitution of a cycle start packet (CSP) in which a band reservation data (#2) 95-3 and a free region 85-4 are arranged in the frame 10 with a band reservation number of 2 (95-1) and an updating counter of 0 (95-2).

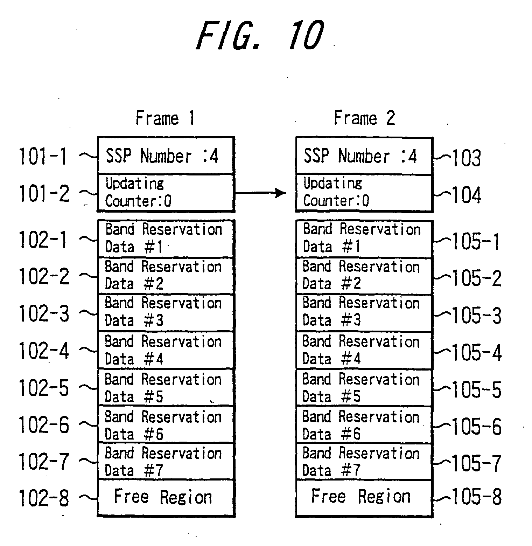

FIG.10 is a diagram illustrating the flow of frames of when a maximum number of band reservation data are added according to the embodiment.

A diagram on the left side illustrates a constitution of the frame 1 in which there are arranged a band reservation data (#1) 102-1~ a band reservation data (#7) 102-7 and a free region 102-8 with a station sync packet (SSP) number of 4 (101-1), an updating counter (counted value) of 0 (101-2) and a band reservation data of 8 (max. value).

The diagram on the right side illustrates a constitution of the frame 2 in which there are arranged a band reservation data (#1) 105-1 ~ a band reservation data (#8) 105-8 with a station sync packet (SSP) number of 4 (103), an updating counter of 0 (104) and a band reservation data (#8) being added to the free region 102-8.

Here, there is no need of further increasing the free region and there is no need of driving the data updating counter.

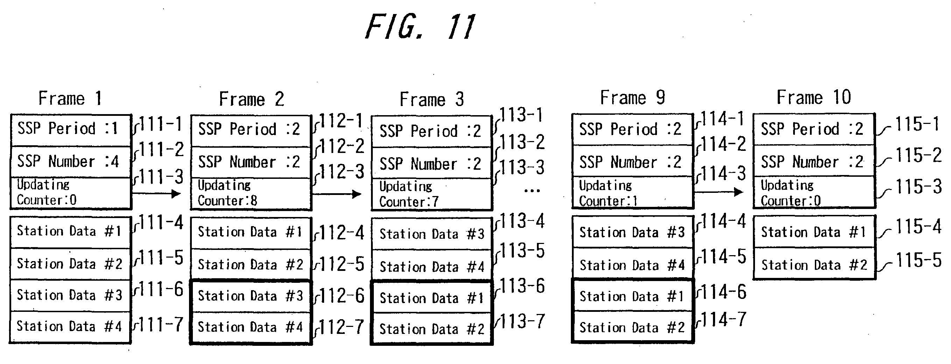

FIG.11 illustrates the flow of frames of when the station data is deleted according to the embodiment.

In FIG.11, the extreme left diagram illustrates the
constitution of a cycle start packet (CSP) of a frame 1 in which there are arranged a station data (#1) 111-4, a station data (#2) 111-5, a station data (#3) 111-6 and a station data (#4) 111-7 with a station sync packet (SSP) period of 1 (111-1), a station sync packet (SSP) number of 4 (111-2) and an updating counter (counted value) of 0 (111-3).

A next right diagram illustrates the constitution of a cycle start packet (CSP) of a frame 2 in which there are arranged a station data (#1) 112-4, a station data (#2) 112-5 as well as a station data (#3) 112-6 and a station data (#4) 112-7 which will be used in the next period with a station sync packet (SSP) period of 1 (112-1), a station sync packet (SSP) number of 2 (112-2) and an updating counter of 8 (112-3).

Here, the updating counter is set to be 8 (112-3) as a timing until the station sync packet (SSP) period and the station sync packet (SSP) number are changed.

That is, in this case, even when the station sync packet (SSP) period is changed, the station data to be transmitted in the next period can be specified.

A further right diagram illustrates the constitution of a cycle start packet (CSP) of a frame 3 in which there are arranged a station data (#3) 113-4, a station data (#4) 113-5 as well as a station data (#1) 113-6 and a station data (#2) 113-7 which will be used in the next period with a station sync packet (SSP) period of 2 (113-1), a station sync packet (SSP) number of 2 (113-2) and an updating counter being subtracted to 7 (113-3).

A diagram on the right side of a dotted line illustrates the constitution of a cycle start packet (CSP) of a frame 9 in which there are arranged a station data (#3) 114-4, a station data (#4) 114-5 as well as a station data (#1) 114-6 and a station data (#2) 114-7 which will be used in the next period with a station sync packet (SSP) period of 2 (114-1), a station sync packet (SSP) number of 2 (114-2) and an updating counter being subtracted to 1 (114-3).

At this moment, if the cycle start packet (CSP) of from the frame 2 up to the frame 9 can be received only once, the station data to be transmitted subsequently can be judged from the frame 10.

The extreme right diagram illustrates the constitution of a cycle start packet (CSP) of the frame 10 in which there are arranged a station data (#1) 115-4 and a station data (#2) 115-5 with a station sync packet (SSP) period of 2 (115-1), a station sync packet (SSP) number of 2 (115-2) and an updating counter of 0 (115-3).

Thus, there can be employed the constitution capable of notifying the station data in the next and subsequent station sync packet (SSP) periods even when the station data is deleted.

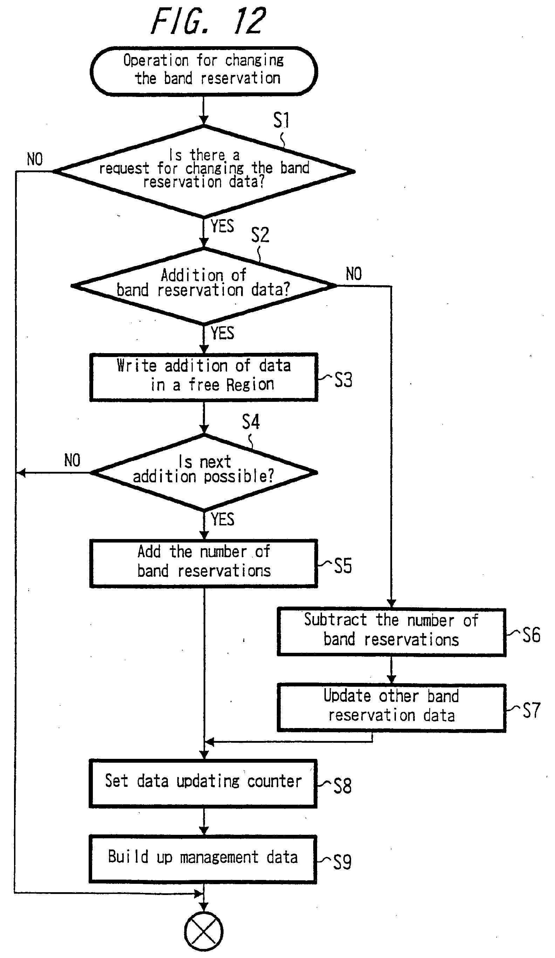

FIG.12 is a flowchart illustrating the operation of when the band reservation data is to be changed by the control station.

At step S1, first, it is judged whether a request is issued for changing the band reservation data. When there is no request for changing the band reservation data at step S1, the routine ends.

Here, a change in the band reservation data is a request for adding or deleting the band reservation number to or from the cycle start (CS) data (down management data). It is assumed that these data are asynchronously transmitted from any communication station.

When there is a request for changing the band reservation data at step S1, it is judged at step S2 whether it is the addition or the deletion of the band reservation data.

When the band reservation data is added at step S2, the band reservation number is added at step S3 from the branch YES, to thereby describe data that is to be added to the free region that has been secured in advance.

Then, at step S4, it is judged whether the addition is possible next time. If the addition is possible, the number of management data to be added is added at step S5 and the routine proceeds to step S8. If the addition is not possible due, for example, to that a maximum number of management data have been set at step S4, then, the routine ends.

When the band reservation data is to be deleted at step S2, the number of the management data to be deleted is subtracted at step S6 from a branch NO.

Then, at step S7, management data such as other band reservation data are updated, and the routine proceeds to step S8.

At step S8, the data updating counter is set and at step S9, a management data including a band reservation data is built up.

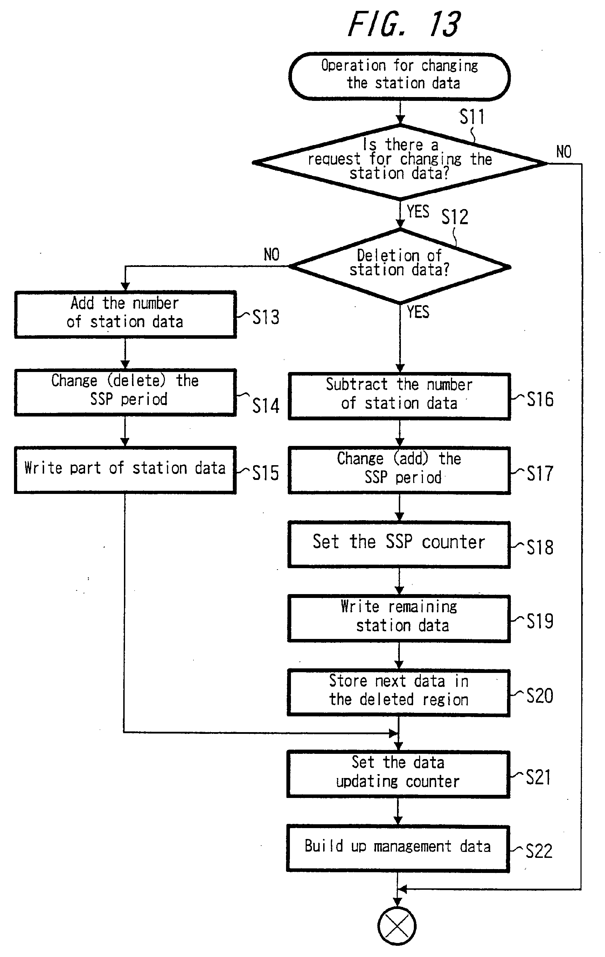

FIG. 13 is a flowchart illustrating the operation for changing the station data by the control station.

At step S11, first, it is judged whether a request is issued for changing the station data. When there is no request for changing the station data at step S11, the routine ends.

Here, a change in the station data represents a case where it is requested to add or delete the station data number to or from the cycle start (CS) data (down management data). It is presumed that the control station issues an instruction at any timing.

When it is requested at step S11 to change the station data, it is judged at step S12 whether it is the addition or deletion of station data from a branch YES.

When the station data is to be added at step S12, the station data number (SSP number) is added at step S13 from a branch NO, the station sync packet (SSP) period is changed (deleted) at step S14, the station data is partly written at step S15, and the routine proceeds to step S21.

At this moment, the station sync packet (SSP) may be set thereby to also specify a position for transmitting the station data.

When the station data is to be deleted at step S12, the station data number (SSP number) is subtracted at step S16 from the branch YES, the station sync packet (SSP) period is changed (added) at step S17, and a station sync packet (SSP) counter is set at step S18.

At step S19, further, the station data transmitted by the frame period set by the station sync packet (SSP) counter is written into the region of the remaining station data. The station data corresponds to the one that is used as the station data of a frame period corresponding to the value of the station sync packet (SSP) after the count-down of the updating counter has been finished.

At step S20, further, the station data transmitted after the next frame period is also written into the region from where the station data is deleted. Therefore, if the management data of the next frame period is not received, it is allowed to estimate the station data of a frame period corresponding to the value of the next station sync packet (SSP) counter. The routine then proceeds to step S21.

At step S21, the data updating counter is set and at step S22, the management data including the station data is built up.

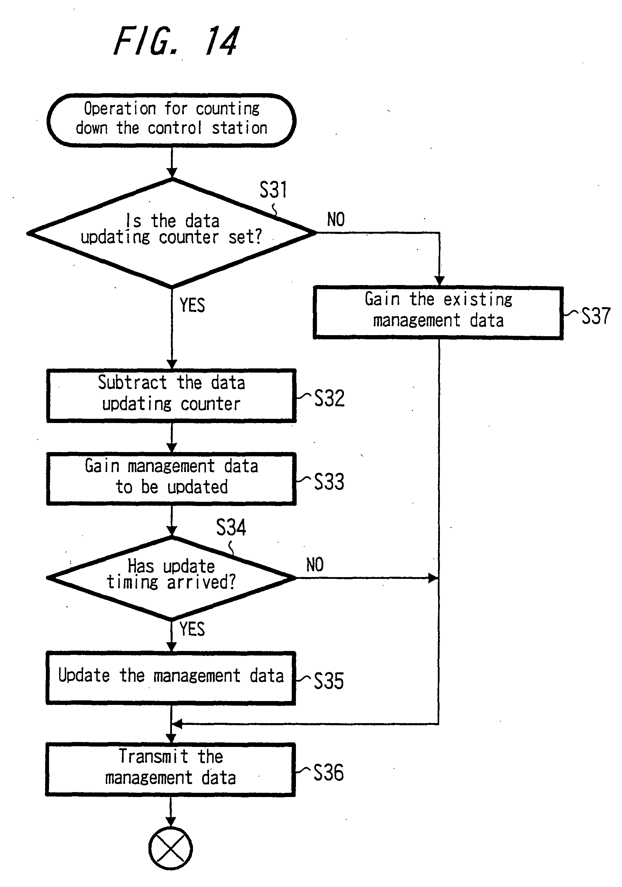

FIG.14 is a flowchart of a case of executing the processing for transmitting the management data and for counting down the updating counter by the control station.

This corresponds to the processing for transmitting the cycle start (CS) in the down management data transmission section 44 arranged at the head of the frame period shown in FIG.4.

At step S31, first, it is judged whether the data updating counter has been set. When the data updating counter is set at step S31, the data updating counter is subtracted at step S32 from a branch YES, and a management data to be updated is gained at step S33.

When it is necessary to transmit data that is to be updated at plural period, the updated data is transmitted each time.

It is judged at step S34 whether the data updating timing (counted value of updating counter = 0) has arrived.
When it has arrived, the management data is updated at step S35.
When the data updating timing has not arrived at step S34, the routine proceeds to step S36.

When the data updating counter has not been set at step S31, the existing management data is gained at step S37 from the branch NO, and the routine proceeds to step S36.

At step S36, the data including the management data is transmitted as a cycle start packet.

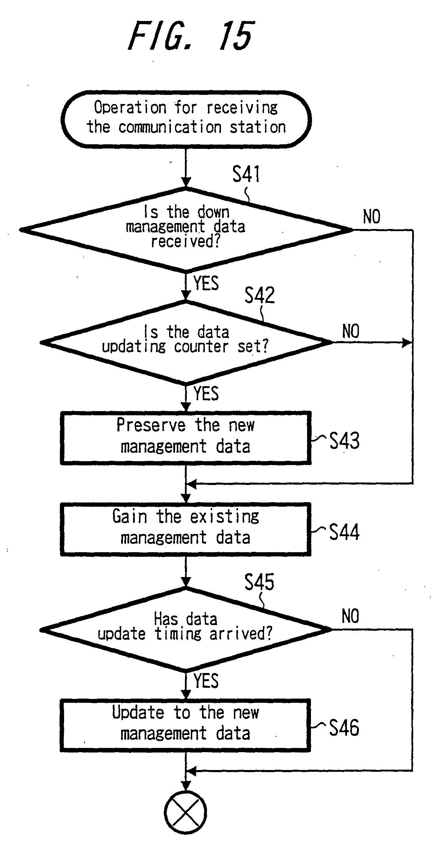

FIG.15 is a flowchart of the operation for receiving management data by a general communication station.

This corresponds to the processing for receiving the cycle start (CS) in the down management data transmission section 44 arranged at the head of the frame period shown in FIG.4.

At step S41, first, it is judged whether the cycle start data (down management data) is received. When the cycle start data (down management data) is received at step S41, it is judged at step S42 whether the data updating counter is set.
When the data updating counter is set at step S42, a new management data (to be changed) is gained and preserved at step S43.

Here, when the data to be updated is transmitted being divided into management data of plural periods, these data are all gained and preserved. Thereafter, the routine proceeds to step S44.

When the cycle start data (down management data) is not received at step S41, the routine readily proceeds to step S44.

At step S44, the existing management data is gained and at step S45, it is judged whether a data updating timing (counted value of updating counter = 0) has arrived.

When the data updating timing by the data updating counter has arrived, processing is executed at step S46 for updating into a new management data, and the parameters are set to values of after updating.

When the data updating timing is not arriving, the processing is executed according to the existing management data.

Though the above-mentioned embodiment has dealt with the case of being applied to the wireless 1394, it should be noted that the invention is in no way limited thereto only but can be applied to any other radio network.

According to the method of controlling transmission of the present invention, the management data to be updated and the update timing are notified to the whole network by securing a region in advance for transmitting the management data to be updated even when the management data has a constitution of a variable length and, hence, the management data can be updated at one timing at a specified timing. That is, the data is updated simultaneously over the whole network by a control operation which is as simple as notifying the data from the control station.

According to the method of controlling transmission of the present invention, further, the control station repetitively transmits the management data to be updated plural times. If the communication stations constituting the network properly receive the management data even once out of plural times of transmission, then, the management data can be updated at one time at a specified timing. By applying the invention to a radio transmission link in which the state of connecting the transmission lines is not stable, therefore, it is allowed to favorably update the data.

According to the method of controlling transmission of the present invention, further, the timing data transmitted from the control station is used as a predetermined counted value, and the communication station that has received the counted value executes the count-down from the counted value specified by the data, and updates the management data after the value that is counted down has reached a predetermined value. Thus, the update timing is set by a simple processing by utilizing the counted value.

According to the method of controlling transmission of the present invention, further, the management data is periodically transmitted with a frame period set by the control station as a reference, and the counted value is counted down in a unit of the frame period. Therefore, the update timing is set simultaneously with the management of the frame period, and the update timing is easily brought into agreement over the whole network.

According to the method of controlling transmission of the present invention, further, a free region is secured for updating the management data next time when the value that is counted down has reached a predetermined value, making it possible to update the management data next time at a higher speed.

According to the method of controlling transmission of the present invention, further, when the management data is to be partly deleted, the management data over plural periods are transmitted being mixed into a management data until the value that is counted down becomes a predetermined value. Therefore, even when the data are not all received that must be received until the value that is counted down reaches a predetermined value, it is allowed to estimate the subsequent management data.

According to the device for controlling transmission of the present invention, it is allowed to specify the timing for updating the management data in updating the management data for other transmission devices in the network and to easily update the management data simultaneously in all communication stations in the network. By securing a free data region for securing a management data free region for updating the management data next time, further, a device is realized for updating the variable length data by the control operation of only one time even when there is used a management data of a variable length.

According to the device for controlling transmission of the present invention, further, the timing data obtained by the timing-specifying means is a count-down data that represents a counted value before it is updated, and the update timing is correctly and easily specified by simply transmitting the counted value.

According to the device for controlling transmission of the present invention, further, plural management data are transmitted in advance by utilizing a region that is to be deleted. Therefore, there is realized a device for transmitting plural management data at one time to all communication stations.

According to the device for controlling transmission of the present invention, further, the timing data obtained by the timing-specifying means is a count-down data that represents a counted value before it is deleted, and the delete timing is correctly and easily specified by simply transmitting the counted value.

According to the device for controlling transmission of the present invention, further, the data can be updated in all communication stations on the network by the update data that has been received in advance at a timing specified by the control device, and the management data can be reliably updated based on the control operation by the control device.

According to the device for controlling transmission of the present invention, further, a free data region is secured for securing the management data free region in order to automatically update the new management data after the elapse of a timing specified by the control device.

Having described preferred embodiments of the present invention with reference to the accompanying drawings, it is to be understood that the present invention is not limited to the above-mentioned embodiments and that various changes and modifications can be effected therein by one skilled in the art without departing from the scope of the present invention as defined in the appended claims.

## Claims

1. A method of controlling transmission in a control station on a network comprising said control station and plural communication stations controlled for their communication based upon management data from said control station, wherein:
said control station sets in advance management data provided with a free region;
when said management data are to be updated, said control station forms timing data for effecting the updating and update management data describing the contents to be updated in said free region , and transmits said update management data to said communication stations; and
said control station updates the management data on the network at a timing specified by said timing data.

2. A method of controlling transmission according to claim 1, wherein said control station repetitively transmits said formed update management data plural times until the timing of updating said management data.

3. A method of controlling transmission according to claim 1 or 2, wherein the timing data transmitted from said control station is used as data of a counted value, the counting-down is effected from a counted value specified by said data, and the management data are updated when the value that is counted-down has reached a predetermined value.

4. A method of controlling transmission according to claim 3, wherein said management data are periodically transmitted with a frame period set by the control station as a reference, and said counted value is counted down with said frame period as a unit.

5. A method of controlling transmission according to any preceding claim, wherein the management data are updated on the network at a timing specified by said timing data, and a free region is set to the management data for the updating next time.

6. A method of controlling transmission in a control station on a network comprising said control station and plural communication stations controlled for their communication based upon management data from said control station, wherein:
when said management data are to be partly deleted, said control station forms timing data for effecting the deletion and update management data describing other management data utilizing a portion that is to be deleted, and transmits said update management data to said communication stations; and
said control station deletes part of said update management data on the network at a timing specified by said timing data.

7. A method of controlling transmission according to claim 6, wherein said control station repetitively transmits said formed update management data plural times until the timing of deleting part of said management data.

8. A method of controlling transmission according to claim 6 or 7, wherein the timing data transmitted from said control station is used as data of a counted value, and the counting-down is effected from a counted value specified by said data, and part of the management data is deleted when the value that is counted-down has reached a predetermined value.

9. A method of controlling transmission according to claim 8, wherein said management data are periodically transmitted with a frame period set by the control station as a reference, and said counted value is counted down with said frame period as a unit.

10. A device for controlling transmission in a control station on a network comprising said control station and plural communication stations controlled for their communication based upon management data from said control station, said device for controlling transmission comprising:
communication means for effecting radio communication with said communication stations on said radio network; and
management data-forming means for forming management data having a free region set in said management data used in common on said radio network; wherein
when said management data are to be updated, said management data-forming means forms timing data for effecting the updating and update management data describing the contents to be updated in said free region , and updates said management data at a timing specified by said timing data.

11. A device for controlling transmission according to claim 10, wherein said timing data is used as data of the counted value, and said management data-forming means effects the count down from a counted value specified by the data, and updates the management data when the value that is counted down has reached a predetermined value.

12. A device for controlling transmission according to claim 10 or 11, wherein said management data-forming means updates the management data at a timing specified by said timing data, and sets a free region to the management data for updating next time.

13. A device for controlling transmission in a control station on a network comprising said control station and plural communication stations controlled for their communication based upon management data from said control station, said device for controlling transmission comprising:
communication means for effecting radio communication with said communication stations on said radio network; and
management data-forming means for forming management data used in common on said radio network; wherein
when said management data are to be partly deleted, said management data-forming means forms timing data for effecting the deletion and update management data describing other management data utilizing a portion to be deleted, and deletes part of said management data at a timing specified by said timing data.

14. A device for controlling transmission according to claim 13, wherein said timing data is used as data of the counted value, and said management data-forming means effects the count down from a counted value specified by the data, and deletes part of the management data when the value that is counted down has reached a predetermined value.

15. A device for controlling transmission according to claim 13 or 14, wherein said management data-forming means deletes part of the management data at a timing specified by said timing data, and sets a free region to the management data for updating next time.

16. A communication station controlled for its communication by management data from a control station, said communication station comprising:
reception means for receiving management data used in common on a radio network; and
control means for controlling the communication according to the management data; wherein
a free region is set in advance to the management data; and
when said management data are to be updated, said reception means receives timing data for effecting the updating and update management data describing the contents to be updated in said free region , and updates said management data at a timing specified by said timing data.

17. A communication station controlled for its communication by management data from a control station, said communication station comprising:
reception means for receiving management data used in common on a radio network; and
control means for controlling the communication according to the management data; wherein
a free region is set in advance to the management data; and
when said management data are to be partly deleted, said reception means receives timing data for effecting the deletion and update management data describing other management data utilizing a portion to be deleted, and deletes part said management data at a timing specified by said timing data.
